# EUROPEAN PATENT APPLICATION

(11) **EP 4 727 213 A1**
(43) Date of publication of application: **15.04.2026**
(21) Application number: 24844246.9
(22) Date of filing: 20.03.2024
(51) Int. Cl.: H04W 36/00

(54) **COMMUNICATION METHOD AND RELATED DEVICE**

(30) Priority: 21.07.2023 CN 202310912125
(71) Applicant: Honor Device Co., Ltd., Shenzhen, Guangdong 518040 (CN)
(72) Inventor: LI, Haibo, Shenzhen, Guangdong 518040 (CN)
(74) Representative: Goddar, Heinz J.
(86) International application number: PCT/CN2024/082609
(87) International publication number: WO 2025/020549

(57) **Abstract**

This application discloses a communication method and a related device. According to the communication method, a terminal device resides in a serving cell to execute a service such as making a call and surfing the Internet. The terminal device may start a timer T1 when determining that a reporting condition for a preset measurement event is satisfied and that a signal of the serving cell and a signal of an adjacent cell thereof satisfy a specific condition, and trigger an RLF process when the timer T1 expires but the terminal device does not receive a handover message. According to the RLF process, the terminal device performs cell selection, and sends an RRC reestablishment request to a network device corresponding to a selected cell to establish an RRC connection to the network device corresponding to the selected cell, and further executes the service based on the RRC connection. Through the method, a duration of service stalling caused by unsuccessful cell handover is reduced, and communication experience of a user during the service is improved.

## Description

This application claims priority to Chinese Patent Application No. 202310912125.0, filed with China National Intellectual Property Administration on July 21, 2023 and entitled "COMMUNICATION METHOD AND RELATED DEVICE", which is incorporated herein by reference in its entirety.

### TECHNICAL FIELD

This application relates to the technical field of terminals, and in particular, to a communication method and a related device.

### BACKGROUND

In a cell handover process, a network device delivers a measurement control message to a terminal device. After receiving the measurement control message, the terminal device performs measurement on "neighboring cells" (for example, adjacent cells) based on the measurement control message, and sends a measurement report to the network device. After receiving the measurement report, the network device determines that the terminal device needs to hand over to another cell, and delivers a handover message to the terminal device (for example, carries an indication to hand over to another cell in an RRC connection reconfiguration message). After receiving the handover message, the terminal device performs cell handover based on the handover message. It may be understood that RRC means radio resource control (Radio Resource Control, RRC).

It may be learned from the foregoing content that the cell handover process is controlled by the network device and the terminal device only performs measurement, reporting, and handover based on instructions delivered by the network device. In a communication system, such as a new radio (New Radio, NR) system or a long term evolution (Long Term Evolution, LTE) system, when a signal of a cell in which a terminal device currently resides weakens, the terminal device may fail to hand over to another cell with a better signal even after a long time due to factors such as rapid attenuation of signal channel quality, improper configuration of a measurement reporting threshold, fast movement of the terminal device, obstruction by objects, long-time preparation for measurement or handover, or the terminal device failing to decode a handover message sent by a network device, which causes long-time stalling of a service currently being executed in the cell in which the terminal device resides, affecting user experience.

Therefore, how to reduce a service stalling duration in a cell handover scenario is a current problem that needs to be resolved urgently.

### SUMMARY

Embodiments of this application provide a communication method and a related device, to reduce a duration of service stalling in a cell handover scenario.

In some embodiments, when cell handover fails or successful handover to another cell needs an excessively long time, an RLF process may be triggered in advance, to select a cell with a better signal for connection, thereby reducing a stalling duration of a terminal device during execution of a service, and improving communication experience of a user during the service.

According to a first aspect, an embodiment of this application provides a communication method, which is applied to a terminal device. The method includes: the terminal device resides in a first cell to execute a service. The terminal device determines whether a reporting condition for a preset measurement event is satisfied, and determines whether a signal of the first cell and a signal of an adjacent cell of the first cell satisfy a preset condition. The terminal device starts a first timer when the reporting condition for the preset measurement event is satisfied and the signal of the first cell and the signal of the adjacent cell of the first cell satisfy the preset condition. The terminal device triggers a radio link failure RLF process in advance when the first timer expires but the terminal device does not receive a handover message. The terminal device performs cell selection according to the RLF process, and selects a second cell to reside in. The terminal device establishes, through a radio resource control RRC reestablishment process, an RRC connection to a network device corresponding to the second cell according to the RLF process. The terminal device further executes the service through the RRC connection. The first cell is a current serving cell of the terminal device. The handover message is used to instruct the terminal device to perform cell handover.

In the solution provided by this embodiment of this application, the terminal device may start the first timer when the reporting condition for the preset measurement time is satisfied and the signal of the cell in which the terminal device currently resides and the signal of the neighboring cell of the cell satisfy the preset condition, to control a time at which the terminal device triggers the RLF process, so that a trigger duration of the RLF process is shortened, thereby enabling the terminal device to select a cell with a better signal for connection as soon as possible, which reduces a stalling duration of service execution by the terminal device and improve communication experience of a user during the service. The service may be a call service. If the voice call service has long-time stalling, user experience is greatly affected.

In some embodiments of this application, the first cell may be a cell B.

In some embodiments of this application, the second cell may be a cell C. It may be understood that the second cell may alternatively be another cell (for example, another neighboring cell of the cell B). This is not specifically limited in this application.

In some embodiments of this application, the first timer may be a timer T1.

In combination with the first aspect, in a possible implementation, the preset condition may include: signal quality of the first cell is less than or equal to a first preset threshold, and signal quality of the second cell is greater than the signal quality of the first cell and a difference between the signal quality of the second cell and the signal quality of the first cell is greater than or equal to a second preset threshold.

In a solution provided by some embodiments of this application, the second cell may be an adjacent cell of the first cell. The terminal device triggers and starts the first timer only when the reporting condition for the preset measurement event is satisfied, the signal quality of the first cell is poor, and the signal quality of the second cell is better than the signal quality of the first cell by a specific degree, to shorten a trigger duration of the RLF process. In other cases where successful cell handover is probably achieved or spends a short time, the terminal device may not need to consume resources to perform the foregoing operations. In this way, a connection to a cell with a better signal can be achieved as quickly as possible in different manners in different scenarios.

In some embodiments of this application, the second cell may be a neighboring cell among one or more neighboring cells of the first cell.

In some embodiments of this application, the first preset threshold may be a preset threshold 1.

In some embodiments of this application, the second preset threshold may be a preset threshold 2.

In combination with the first aspect, in a possible implementation, that signal quality of the first cell is less than or equal to a first preset threshold may specifically include at least one of the following: a signal-to-noise ratio of the first cell is less than or equal to a first threshold; a reference signal received power of the first cell is less than or equal to a second threshold; or reference signal received quality of the first cell is less than or equal to a third threshold. That signal quality of the second cell is greater than the signal quality of the first cell and a difference between the signal quality of the second cell and the signal quality of the first cell is greater than or equal to a second preset threshold may specifically include at least one of the following: a signal-to-noise ratio of the second cell is greater than or equal to the signal-to-noise ratio of the first cell and a difference between the signal-to-noise ratio of the second cell and the signal-to-noise ratio of the first cell is greater than or equal to a fourth threshold; a reference signal received power of the second cell is greater than or equal to the reference signal received power of the first cell and a difference between the reference signal received power of the second cell and the reference signal received power of the first cell is greater than or equal to a fifth threshold; or reference signal received quality of the second cell is greater than or equal to the reference signal received quality of the first cell and a difference between the reference signal received quality of the second cell and the reference signal received quality of the first cell is greater than or equal to a sixth threshold.

In a solution provided by some embodiments of this application, the terminal device may measure the signal quality of the cell by using at least one of parameters such as an SNR, an RSRP, and RSRQ. In particular, the terminal device may measure the signal quality of the first cell and the second cell in combination with different parameters. In this way, accuracy of the signal quality of the first cell and the second cell measured by the terminal device can be increased.

In some embodiments of this application, the first threshold may be a threshold_1. The second threshold may be a threshold_2. The third threshold may be a threshold_3. The fourth threshold may be a threshold_4. The fifth threshold may be a threshold_5. The sixth threshold may be a threshold_6.

In combination with the first aspect, in a possible implementation, the method may further include: The terminal device sends a preset measurement report at least once when the reporting condition for the preset measurement event is satisfied, where the preset measurement report corresponds to the preset measurement event. That the terminal device triggers an RLF process in advance includes: a duration from sending, by the terminal, the preset measurement report for the first time device to expiration of the first timer is less than a duration from sending, by the terminal device, the preset measurement report for the first time to expiration of a timer T310.

In a solution provided by some embodiments of this application, a duration defined by the first timer may be set based on a duration defined by the timer T310. The expiration of the timer T310 is one of reasons for triggering the RLF process. In this way, a trigger duration of the RLF process can be shortened, that is, the terminal device can trigger the RLF process in advance, thereby enabling the terminal device to connect to a cell with a better signal as quickly as possible, and reducing a stalling duration of service execution by the terminal device.

In combination with the first aspect, in a possible implementation, that the terminal device triggers an RLF process in advance includes: a duration of the first timer is less than a duration of a timer T310.

It may be understood that the duration of the timer and the duration defined by the timer mentioned in this application represent the same meaning.

In combination with the first aspect, in a possible implementation, that the terminal device triggers an RLF process in advance includes: the duration of the first timer is 300 milliseconds or 500 milliseconds.

In combination with the first aspect, in a possible implementation, that the terminal device triggers an RLF process in advance includes:
the duration from sending, by the terminal device, the preset measurement report corresponding to the preset measurement event for the first time to expiration of the first timer satisfies at least one of the following: the duration is less than a duration from sending, by the terminal device, the preset measurement report for the first time to occurrence of an uplink listen before talk LBT failure; the duration is less than a duration from sending, by the terminal device, the preset measurement report for the first time to receiving a random access problem indication from a master cell group media access control MCG MAC; the duration is less than a duration from sending, by the terminal device, the preset measurement report for the first time to reaching, by a retransmission count of the master cell group radio link control MCG RLC, a maximum value; or the duration is less than a duration from sending, by the terminal device, the preset measurement report for the first time to receiving a backhaul link radio link failure BH RLF indication on a backhaul adaptation protocol BAP entity.

In a solution provided by some embodiments of this application, the duration defined by the first timer may be set based on the reason for triggering the RLF process. In this way, a trigger duration of the RLF process can be shortened, that is, the terminal device can trigger the RLF process in advance, thereby enabling the terminal device to connect to a cell with a better signal as quickly as possible, and reducing a stalling duration of service execution by the terminal device.

In combination with the first aspect, in a possible implementation, a time at which the terminal device starts the first timer is earlier than a time at which the terminal device sends the preset measurement report corresponding to the preset measurement event to the network device corresponding to the first cell for the first time, and a time interval between the time at which the terminal device starts the first timer and the time at which the terminal device sends the preset measurement report to the network device corresponding to the first cell for the first time is short the time at which the terminal device starts the first timer is later than the time at which the terminal device sends the preset measurement report to the network device corresponding to the first cell for the first time, and the time interval between the time at which the terminal device starts the first timer and the time at which the terminal device sends the preset measurement report to the network device corresponding to the first cell for the first time is short; or the time at which the terminal device starts the first timer is the same as the time at which the terminal device sends the preset measurement report to the network device corresponding to the first cell for the first time.

In combination with the first aspect, in a possible implementation, the preset measurement event may be an event A3 or an event A5.

In combination with the first aspect, in a possible implementation, the second cell is a cell with a strongest signal among one or more adjacent cells of the first cell.

According to a second aspect, some embodiments of this application provide a terminal device. The terminal device includes one or more processors and one or more memories. The one or more memories are coupled to the one or more processors. The memory is configured to store computer program code. The computer program code includes computer instructions. The one or more processors invoke the computer instructions to enable the terminal device to perform the method as described in the first aspect or any implementation of the first aspect.

According to a third aspect, some embodiments of this application provide a computer storage medium, including computer instructions. The computer instructions, when run on a terminal device, enable the terminal device to perform the method as described in the first aspect or any implementation of the first aspect.

According to a fourth aspect, an embodiment of this application provides a chip system, applied to a terminal device. The chip system includes at least one processor and an interface. The interface is configured to receive instructions and transmit the instructions to the at least one processor. The at least one processor runs the instructions to enable the terminal device to perform the method as described in the first aspect or any implementation of the first aspect.

In some embodiments of this application, the chip system may be a modem (modulation and demodulation processor), i.e., a baseband processor.

In some other embodiments of this application, the chip system may include a modem and other modules, for example, an AP (Application Processor, application processor) or a GPU (Graphics Processing Unit, graphics processing unit).

According to a fifth aspect, an embodiment of this application provides a computer program product, including instructions. The computer program product, when run on a terminal device, enables the terminal device to perform the method as described in the first aspect or any implementation of the first aspect.

It may be understood that the terminal device provided in the second aspect, the computer storage medium provided in the third aspect, the chip system provided in the fourth aspect, and the computer program product provided in the fifth aspect are all configured to perform the method as described in the first aspect or any implementation of the first aspect. Therefore, for beneficial effects that can be achieved, refer to the beneficial effects of any possible implementation in the foregoing first aspect. Details are not described herein.

### BRIEF DESCRIPTION OF DRAWINGS

FIG. 1 is a schematic diagram of a handover process according to an embodiment of this application;
FIG. 2 is a schematic diagram of a network architecture according to an embodiment of this application;
FIG. 3 is a flowchart of a communication method according to an embodiment of this application;
FIG. 4 is a flowchart of another communication method according to an embodiment of this application;
FIG. 5 is a schematic diagram of a hardware structure of a terminal device according to an embodiment of this application; and
FIG. 6 is a schematic diagram of a software structure of a terminal device according to an embodiment of this application.

### DESCRIPTION OF EMBODIMENTS

Technical solutions in embodiments of this application are clearly and completely described below with reference to drawings in embodiments of this application. In the descriptions of embodiments of this application, unless otherwise specified, "/" means "or". For example, A/B may represent A or B. A term "and/or" herein describes only an association relationship for describing associated objects and represents that three relationships may exist. For example, A and/or B may represent the following three cases: only A exists, both A and B exist, and only B exists. In addition, in the descriptions of embodiments of this application, "a plurality of" represents two or more.

It should be understood that terms "first", "second", and the like in the specification, claims, and the drawings of this application are used to distinguish between different objects, rather than to describe a specific order. In addition, terms "include", "have", and any variant thereof are intended to cover a non-exclusive inclusion. For example, a process, a method, a system, a product, or a device that includes a series of steps or units is not limited to the listed steps or units, and instead, optionally further includes a step or a unit that is not listed, or optionally further includes another step or unit that is intrinsic to the process, the method, the product, or the device.

"An embodiment" mentioned in this application means that particular features, structures, or characteristics described with reference to the embodiment may be included in at least one embodiment of this application. The phrase appearing at various locations in this specification unnecessarily indicates a same embodiment or an independent or alternative embodiment exclusive to another embodiment. A person skilled in the art explicitly or implicitly understands that the embodiments described in this application may be combined with other embodiments.

### First, descriptions of some terms and related technologies involved in this application are provided to facilitate understanding by a person skilled in the art.

### 1. Cell (cell)

A cell is an area within a wireless coverage of a network device (for example, a base station). Within the area, a terminal device can communicate reliably with the network device through a wireless signal. It may be understood that a coverage of each network device may be divided into one or more cells, and each cell may correspond to one or more frequencies. It may be further understood that each cell is an area formed by a coverage of one or more frequencies.

In some embodiments of this application, different cells may correspond to a same network device. In other words, a network device to which a cell A belongs and a network device to which a cell B belongs may be a same network device. For example, the cell A and the cell B may be managed by a same base station. In this case, the cell A and the cell B may share the same base station.

In some embodiments of this application, different cells may correspond to different network devices. In other words, the network device to which the cell A belongs and the network device to which the cell B belongs may be different network devices. For example, the cell A and the cell B may be managed by different base stations. For another example, the cell A and the cell B may be managed by a same base station, but the cell A and the cell B correspond to different radio frequency processing units in the same base station.

An adjacent cell, also called a neighboring cell or a neighbor cell, refers to an area within a wireless coverage of a network device that is adjacent to a current serving cell, has a physical location correlation, and transmits signals on a same frequency or on different frequencies. In other words, an adjacent cell refers to a cell that is connected to or adjacent to a current serving cell. In general, an adjacent cell may be understood as a "neighboring cell" of a current serving cell.

### 2. Cell handover (Handover, HO)

Cell handover refers to a process of migrating a communication link from a terminal device to a current network device to another network device in mobile communication. In a wireless communication system, when the terminal device moves from one cell to another cell or approaches another cell, cell handover needs to be performed to maintain continuous communication of the terminal device.

The cell handover can be intra-station handover or inter-station handover. This is not specifically limited in this application. Intra-station handover occurs when a source cell and a target cell belong to a same network device (for example, a base station). Inter-station handover occurs when the source cell and the target cell belong to different network devices (for example, base stations).

In this application, the source cell refers to a cell that provides services to the terminal device before the cell handover, and the target cell refers to a cell that provides services to the terminal device after the cell handover. For convenience of description, a network device corresponding to the source cell is denoted as a source network device, and a network device corresponding to the target cell is denoted as a target network device. It may be understood that the source network device and the target network device may be a same network device or different network devices.

A measurement-based cell handover process is described below.

First step: The source network device delivers a measurement control message to the terminal device.

The measurement control message may be an RRC connection reconfiguration (RRC Connection Reconfiguration) message carrying an information element measConfig. The measurement control message is delivered to the terminal device in a form of measId. measId is an index of a measurement configuration entry of a database. Each measId corresponds to two elements: measObjectId and reportConfigId. measObjectId is a measurement object identifier, which corresponds to a measurement object configuration item. reportConfigId is a measurement report identifier, which corresponds to a measurement report configuration item. The two elements are located at a beginning of a same information element measConfig. Briefly, the network device compiles a plurality of measurement configuration items into a mapping relationship table, and sends configurations and mapping relationships corresponding to the mapping relationship table to the terminal device. The terminal device carries corresponding measId in a measurement report when subsequently transmitting the measurement report to the network device, so that the network device can correctly parse the measurement report and process measurement data.

Correspondingly, the terminal device may receive the measurement control message sent by the source network device.

Second step: The terminal device performs measurement configuration based on the measurement control message, and sends a measurement report to the source network device.

The terminal device performs measurement on a "neighboring cell" (including the source cell and adjacent cells of the source cell) at a specified RAT and frequency based on measurement configuration items included in the measurement control message delivered by the network device, and sends a measurement report corresponding to a measurement event indicated by the measurement control message to the source network device.

Correspondingly, the source network device may receive the measurement report sent by the terminal device.

Third step: The source network device performs handover determining and handover preparation.

The source network device performs handover determining based on the measurement report and determines a target cell after receiving the measurement report sent by the terminal device. In other words, the source network device determines a cell for the terminal device to hand over based on the measurement report. After performing handover determining, the source network device may perform handover preparation, i.e., resource reservation (for example, the source network device requests the target network device to prepare resources required by the terminal device), and generates an RRC connection reconfiguration message.

Fourth step: The source network device sends the RRC connection reconfiguration message to the terminal device.

After performing the handover determining and the handover preparation, the source network device may perform handover. Specifically, the source network device sends the RRC connection reconfiguration (RRC Connection Reconfiguration) message to the terminal device. The RRC connection reconfiguration (RRC Connection Reconfiguration) message includes parameters required for the terminal device to connect to the target cell. The parameters required for the terminal device to connect to the target cell may include radio resource configurations such as a cell ID, a carrier frequency, and a target power and physical resource configurations.

For a long term evolution (long term evolution, LTE) network, the source network device notifies the terminal device of relevant information of the target cell through an information element (Information Element, IE) mobilityControlInfo included in the RRC connection reconfiguration message.

For a new radio (New Radio, NR) network, the source network device notifies the terminal device of the relevant information of the target cell through reconfigurationWithSync in spCellConfig included in the RRC connection reconfiguration message.

Correspondingly, the terminal device may receive the RRC connection reconfiguration message sent by the source network device.

Fifth step: The terminal device hands over to the target cell based on the RRC connection reconfiguration message, and sends an RRC connection reconfiguration complete message to the target cell.

After receiving the RRC connection reconfiguration message sent by the source network device, the terminal device cuts off a wireless connection to the source network device, and starts to establish a new wireless connection to the target network device. In this process, data transmission is interrupted. This process includes steps such as downlink synchronization establishment, timing advance, and data sending. When the terminal device successfully establishes a wireless connection to the target network device, the terminal device transmits the RRC connection reconfiguration complete (RRC Connection Reconfiguration Complete) message to the target network device to indicate that the handover process is completed for the terminal device.

### 3. Measurement report (Measurement Report, MR)

The 3rd generation partnership project (3rd Generation Partnership Project, 3GPP) specification proposes a set of predefined measurement reporting mechanisms for execution by a terminal device. These predefined types of measurement reports are called "event (EVENT)". Types of "events" to be reported by the terminal device are specified by an RRC signaling message transmitted by a network device (for example, the RRC connection reconfiguration message in the first step of the foregoing handover process).

Measurement report event types are described in detail below.

### (1) Intra-system handover event types

Event A1 (Event A1): Serving cell quality is higher than an absolute threshold (Serving becomes better than threshold) (unit: dBm).
Event A2 (Event A2): Serving cell quality is lower than an absolute threshold (Serving becomes worse than threshold) (unit: dBm).
Event A3 (Event A3): A neighbor cell (also called a neighboring cell, i.e., an adjacent cell) is better than a current serving cell by a relative value (Neighbour becomes offset better than SpCell) (unit: dB).
Event A4 (Event A4): Neighbor cell quality is higher than an absolute threshold (Neighbour becomes better than threshold) (unit: dBm).
Event A5 (Event A5): Serving cell quality is lower than an absolute threshold threshold1, and neighbor cell quality is higher than an absolute threshold threshold2 (SpCell becomes worse than threshold1 and neighbour becomes better than threshold2) (unit: dBm).
Event A6 (Event A6): Neighbor cell quality is higher than secondary cell (Secondary Cell, SCell) quality by an absolute threshold (Neighbour becomes offset better than SCell) (unit: dB).

### (2) Inter-system handover event types

Event B1 (Event B1): Inter-system neighbor cell quality is better than an absolute threshold (Inter RAT neighbour becomes better than threshold) (unit: dBm).
Event B2 (Event B2): A serving cell is lower than an absolute threshold threshold1, and an inter-system neighbor cell is better than an absolute threshold threshold2 (PCell becomes worse than threshold1 and inter RAT neighbour becomes better than threshold2) (unit: dBm).

It may be understood that the measurement event corresponding to the measurement report and the event type corresponding to the measurement report mentioned in this application represent the same meaning.

### 4. Cell selection

Cell selection includes the following two situations:

### (1) Initial cell selection

When a terminal device does not store any evolved universal terrestrial radio access (Evolved Universal Terrestrial Radio Access, E-UTRA) carrier frequency information (for example, when the terminal device is powered on for the first time), the terminal device may scan all E-UTRA frequency bands based on a capability thereof. When finding a suitable cell, the terminal device resides in the cell. It should be noted that, the terminal device only needs to search for a cell with best signal quality on each carrier frequency.

### (2) Cell selection based on stored information

When the terminal device stores previous E-UTRA carrier frequency information and cell parameter information, the terminal device may preferentially search for these carrier frequencies and cells. When finding a suitable cell, the terminal device resides in the cell. If no suitable cell is found in the stored information, the terminal device starts the foregoing initial cell selection.

It should be noted that the expression "finding a suitable cell" means finding a cell satisfying an S criterion and allowing the terminal device to reside in.

It is worth noting that, during cell selection, regardless of whether the terminal device stores carrier frequency information, the terminal device does not perform cell selection based on a carrier frequency priority, but instead based on cell signal quality and the S criterion.

The S criterion is Srxlev > 0 and Squal > 0. In other words, if a cell satisfies the S criterion, the cell necessarily satisfies both Srxlev > 0 and Squal > 0. For specific meanings of Srxlev and Squal, refer to relevant technical documents. Details are not described herein.

It may be learned from the foregoing content that the cell handover is controlled by the network device and the terminal device only performs measurement, reporting, and handover based on instructions delivered by the network device. In a communication system, when a signal of the cell in which the terminal device currently resides weakens, sending the measurement report to the network device may fail due to factors such as rapid attenuation of signal channel quality or improper configuration of a measurement reporting threshold. Therefore, the network device cannot receive the measurement report and cannot know that the terminal device may try to send the measurement report. As a result, the terminal device cannot hand over to another cell with a better signal even after a long time, resulting in long-time stalling of the service being executed in the cell in which the terminal device currently resides (i.e., the serving cell). In addition, factors such as fast movement of the terminal device, obstruction by objects, long-time preparation for measurement or handover, or the terminal device failing to decode a handover message sent by the network device cause a failure in handing over to another cell with a better signal in time, resulting in long-time stalling of the service currently being executed in the cell in which the terminal device resides.

In particular, in a high-speed rail scenario, due to factors such as a high speed and obstruction by objects such as a tunnel, the signal frequently rapidly weakens to a low level. In this case, even if the terminal device performs measurement and reports the event A3, an A3 MR (i.e., a measurement report with an event type of the event A3) may not be successfully sent to the network device. Therefore, the terminal device may never receive an HO command sent by the network device, resulting a worsen signal, and eventually leading to a radio link failure (Radio Link Failure, RLF). In this case, only after the terminal device selects a cell with a better signal through cell selection, can the service be resumed (for example, a voice call is resumed). It may be understood that, in the foregoing process, the service interruption time is long, that is, the stalling time is long, which affects user experience.

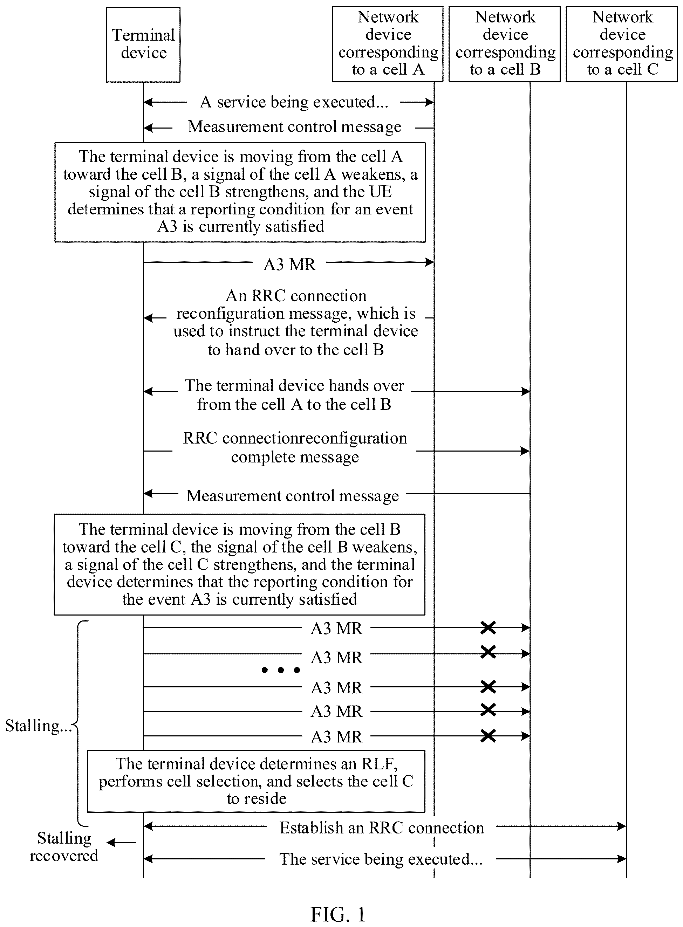

A normal cell handover process and an abnormal cell handover process that leads to service stalling are described below in combination with FIG. 1.

### 1. Normal cell handover process

As shown in FIG. 1, the terminal device resides in a cell A and is executing a service (for example, making a call or surfing the Internet). In other words, the terminal device is executing a service such as making a call or surfing the Internet based on a wireless connection between the terminal device and a network device corresponding to the cell A. The network device corresponding to the cell A may send a measurement control message to the terminal device. The terminal device may perform measurement on adjacent cells of the cell A based on the measurement control message. The adjacent cells of the cell A include a cell B. In this case, the terminal device is moving from the cell A toward the cell B. Therefore, the signal of the cell A weakens, and the signal of the cell B strengthens. The terminal device determines, based on a measurement result, that currently a reporting condition for the event A3 is satisfied. The terminal device transmits an A3 MR to the network device corresponding to the cell A. After receiving the A3 MR, the network device corresponding to the cell A performs handover determining based on the A3 MR, determines that the cell B is a target cell, and performs handover preparation (for example, the network device corresponding to the cell A communicates with a network device corresponding to the cell B, to determine whether the cell B allows the terminal device to connect). After the handover preparation is completed, the network device corresponding to the cell A sends an RRC connection reconfiguration message to the terminal device. The RRC connection reconfiguration message is used to instruct the terminal device to hand over to the cell B. The terminal device hands over from the cell A to the cell B based on parameters in the RRC connection reconfiguration message, and after transmits an RRC connection reconfiguration complete message to the network device corresponding to the cell B after completing the handover. In this case, the terminal device can reside in the cell B to execute a service such as making a voice call or surfing the Internet.

### 2. Abnormal cell handover process that leads to service stalling

As shown in FIG. 1, the network device corresponding to the cell B may send a measurement control message to the terminal device. The terminal device may perform measurement on the cell B and adjacent cells of the cell B based on the measurement control message. The adjacent cells of the cell B include a cell C. In this case, the terminal device is moving from the cell B toward the cell C. Therefore, the signal of the cell B weakens, and the signal of the cell C strengthens. The terminal device determines, based on a measurement result, that currently a reporting condition for the event A3 is satisfied. The terminal device sends an A3 MR to the network device corresponding to the cell B. The network device corresponding to the cell B fails to receive the A3 MR. The terminal device may send the A3 MR to the network device corresponding to the cell B a plurality of times. It may be understood that, if the network device corresponding to the cell B continuously fails to receive the A3 MR, signal receiving of the terminal device further deteriorates, resulting in stalling or even service interruption.

When the terminal device cannot hand over to the cell C and specific conditions are satisfied (for details, reference may be made to reasons for triggering RLF described in the 3GPP protocol), the terminal device triggers RLF and performs cell selection to reside in the cell C. The terminal device establishes an RRC connection to the network device corresponding to the cell C. In this case, stalling is eliminated, that is, the terminal device resumes the service. In other words, in this case, the terminal device may be executing a service such as making a call or surfing the Internet based on a wireless connection between the terminal device and a network device corresponding to the cell C.

In some embodiments of this application, the network device corresponding to the cell B may receive the A3 MR, and send a handover message to the terminal device (for example, an RRC connection reconfiguration message carrying a handover indication, where the handover indication may instruct the terminal device to hand over to another cell). The terminal device may fail to receive the handover message or fail to decode the handover message.

An embodiment of this application provides a communication method and a related device. According to the communication method, a terminal device may execute a service such as making a call and surfing the Internet in a source cell. The terminal device may start a timer T1 when determining that a reporting condition for a preset measurement event is satisfied and that a signal of the source cell and a signal of an adjacent cell thereof satisfy a specific condition, and trigger an RLF process when the timer T1 expires but the terminal device does not receive a handover message. According to the RLF process, the terminal device performs cell selection, and sends an RRC reestablishment request to a network device corresponding to a selected cell to establish an RRC connection to the network device corresponding to the selected cell, and further executes the service based on the RRC connection. Through the method, a duration of service stalling caused by unsuccessful cell handover is reduced, and communication experience of a user during the service is improved.

**In order to better understand the communication method and the related device provided in embodiments of this application, a network architecture used in embodiments of this application is described below.**

The network architecture used in embodiments of this application may include at least two cells and at least one terminal device.

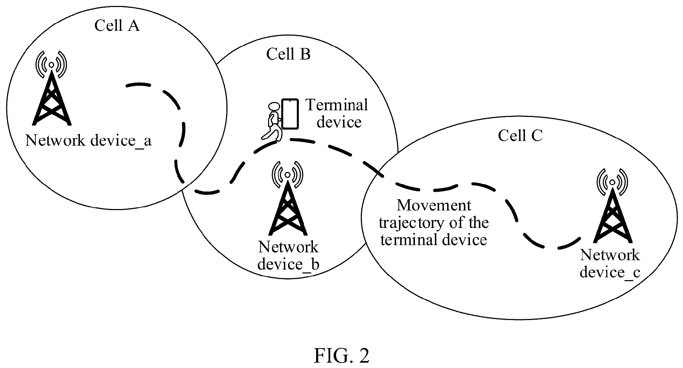

For example, refer to FIG. 2. FIG. 2 is a schematic diagram of a network architecture according to an embodiment of this application. As shown in FIG. 2, the network architecture may include a terminal device, a cell A belonging to a network device_a, a cell B belonging to a network device_b, and a cell C belonging to a network device_c. As shown in FIG. 2, a cell in which the terminal device currently resides is the cell B, and a movement trajectory of the terminal device is from the cell A to the cell B and then from the cell B to the cell C. The cell C is a neighboring cell (i.e., an adjacent cell) of the cell B. In other words, the cell C is a cell among at least one neighboring cell of the cell B. Similarly, the cell B is a cell among the at least one neighboring cell of the cell A.

It may be understood that the network architecture provided in this embodiment of this application may further include more cells. This is not limited in this application.

In some embodiments of this application, one network device may correspond to one or more cells. The cell A, the cell B, and the cell C may belong to a same network device. In other words, the network device_a, the network device_b, and the network device_c may be a same network device. In this case, the terminal device performs intra-network device handover. Optionally, the cell A, the cell B, and the cell C may not completely belong to the same network device. In other words, the network device_a, the network device_b, and the network device_c may not completely be the same network device. That the cell A, the cell B, and the cell C do not completely belong to the same network device specifically includes: at most two of the network device to which the cell A belongs, the network device to which the cell B belongs, and the network device to which the cell C belongs are the same.

The technical solution of this embodiment of this application may be applied to various communication systems, for example a global system for mobile communication (Global System for Mobile Communication, GSM), a code division multiple access (Code Division Multiple Access, CDMA) system, a wideband code division multiple access (Wideband Code Division Multiple Access, WCDMA) system, a general packet radio service (General Packet Radio Service, GPRS), an LTE system, an LTE frequency division duplex (Frequency Division Duplex, FDD) system, an LTE time division duplex (Time Division Duplex, TDD) system, a universal mobile telecommunications system (Universal Mobile Telecommunications System, UMTS), an enhanced data rate for GSM evolution (Enhanced Data Rate for GSM Evolution, EDGE) system, and a worldwide interoperability for microwave access (Worldwide Interoperability for Microwave Access, WiMAX) system. The technical solution of this embodiment of this application may be further applied to other communication systems, for example, a public land mobile network (Public Land Mobile Network, PLMN) system, a 5th generation (5th Generation, 5G) system, a communication system after 5G, or New Radio (New Radio, NR). This is not limited in this embodiment of this application.

The terminal (terminal) device in this embodiment of this application may also be referred to as a user equipment (User Equipment, UE), a user terminal, a mobile station (Mobile Station, MS), a mobile terminal (Mobile Terminal, MT), or the like. The terminal device may be a device that includes a wireless transceiver function and can cooperate with a network device to provide communication services for a user. The terminal device may be a handheld terminal, a notebook computer, a subscriber unit (Subscriber Unit), a cellular phone (Cellular Phone), a smart phone (Smart Phone), a wireless data card, a personal digital assistant (Personal Digital Assistant, PDA) computer, a tablet computer, a wireless modem (modem), a handheld (handheld) device, a laptop computer (Laptop Computer), a cordless phone (Cordless Phone) or a wireless local loop (Wireless Local Loop, WLL) station, a machine type communication (Machine Type Communication, MTC) terminal, a wearable device (for example, a smart watch, a smart bracelet, or a pedometer), an on-board device (for example, a car, a bicycle, an electric vehicle, an airplane, a ship, a train, or a high-speed rail), a virtual reality (Virtual Reality, VR) device, an augmented reality (Augmented Reality, AR) device, a wireless terminal in an industrial control (Industrial Control), a smart home device (for example, a refrigerator, a television, an air conditioner, or an electric meter), a smart robot, a workshop device, a wireless terminal in self driving (Self Driving), a wireless terminal in a remote medical surgery (Remote Medical Surgery), a wireless terminal in a smart grid (Smart Grid), a wireless terminal in transportation safety (Transportation Safety), a wireless terminal in smart city (Smart City), a wireless terminal in smart home (Smart Home), a flying device (for example, a smart robot or an unmanned aerial vehicle), a wireless terminal in a 5G network or a future communication network, or the like. This is not limited in this embodiment of this application.

The network device in this embodiment of this application may be a device used for communication with a terminal device. For example, the network device may be a base station (Base Transceiver Station, BTS) in a global system for mobile communications (Global System for Mobile Communications, GSM) or a code division multiple access (Code Division Multiple Access, CDMA) system, a base station (NodeB, NB) in the wideband code division multiple access (Wideband Code Division Multiple Access, WCDMA) system, an evolved base station (evolutional Node B, eNB or eNodeB) in the LTE system, or a radio controller in a cloud radio access network (Cloud Radio Access Network, CRAN) scenario. Alternatively, the network device may be a relay station, an access point, an on-board device, a wearable device, a network device in a future 5G network or a network after 5G, or a network device in a future evolved PLMN network, for example, a transmitting and receiving point (TRP or TP) in an NR system, a base station (gNB) in an NR system, one antenna panel or a set of antenna panels (including a plurality of antenna panels) of a base station in a 5G system, or the like. This is not limited in this embodiment of this application.

Optionally, the base station in this embodiment of this application may include various forms of base stations, for example a macro base station, a micro base station (also referred to as a small cell), a relay station, an access point, a next-generation base station (gNodeB, gNB), a transmitting and receiving point (Transmitting and Receiving Point, TRP), a transmitting point (Transmitting Point, TP), a mobile switching center, or a device that serves as a base station in device-to-device (Device-to-Device, D2D), vehicle-to-everything (Vehicle-to-Everything, V2X), machine-to-machine (Machine-to-Machine, M2M) communication. This is not limited in this embodiment of this application.

A specific structure of an execution body of the method provided in embodiments of this application is not specifically limited in embodiments of this application, provided that communication can be performed according to the method provided in embodiments of this application by running a program that records code of the method provided in embodiments of this application. For example, the execution body of the method provided in embodiments of this application may be a terminal device or a network device or a functional module that is in the terminal device or the network device and that can invoke a program and execute the program.

**A communication method provided in embodiments of this application is described below based on the foregoing network architecture.**

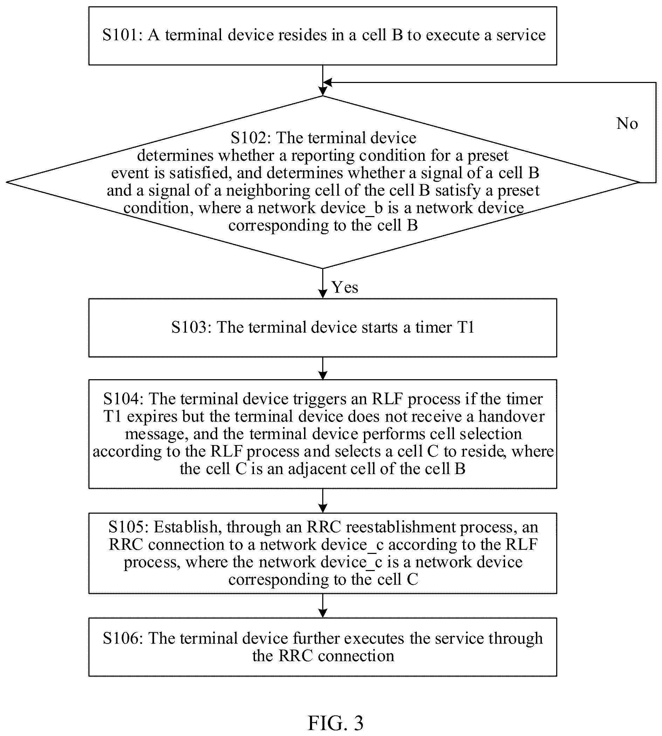

Refer to FIG. 3. FIG. 3 is a flowchart of a communication method according to an embodiment of this application. The communication method may include but is not limited to the following steps:

S101: A terminal device resides in a cell B to execute a service.

It may be understood that a current serving cell of the terminal device is the cell B. That is, the cell B is a source cell. The terminal device may reside in the cell B to execute a service such as making a call or surfing the Internet.

In some embodiments of this application, the terminal device originally resided in a cell A, and subsequently resides in the cell B through cell selection/cell reselection/HO or the like (as shown in FIG. 2).

S102: The terminal device determines whether a reporting condition for a preset measurement event is satisfied, and determines whether a signal of the cell B and a signal of a neighboring cell of the cell B satisfy a preset condition. A network device_b is a network device corresponding to the cell B.

It may be understood that, when the terminal device resides in the cell B to execute a service, the network device corresponding to the cell B (i.e., the network device_b) may send a measurement control message to the terminal device. The measurement control message may include a plurality of measurement configuration items. After receiving the measurement control message, the terminal device may perform measurement on the cell B and the adjacent cell thereof based on the plurality of measurement configuration items included in the measurement control message, to obtain a measurement result. The terminal device may determine, based on the measurement result, whether a reporting condition for a measurement report of an event type indicated by the measurement control message is satisfied. If so, the terminal device sends the corresponding measurement report to the network device_b. It may be understood that for relevant description of the measurement control message and the measurement configuration items, refer to the foregoing description and technical documents of relevant standards. Details are not described herein.

It may be understood that the terminal device may determine, based on the measurement result, whether the reporting condition for the preset measurement event is satisfied, and may alternatively determine, based on the measurement result, whether the signal of the cell B and the signal of the neighboring cell of the cell B satisfy the preset condition. If the terminal device determines that the reporting condition for the preset measurement event is satisfied and that the signal of the cell B and the signal of the neighboring cell of the cell B satisfy the preset condition, the terminal device may perform step S103. It may be understood that whether the terminal device determines whether the reporting condition for the preset measurement event is satisfied or determines whether the signal of the cell B and the signal of the neighboring cell of the cell B satisfy the preset condition first is not limited in this application. For details, refer to the following. The details are not described herein.

In some embodiments of this application, after the terminal device determines that the reporting condition for the preset measurement event is satisfied, the terminal device may further determine whether the signal of the cell B and the signal of the neighboring cell of the cell B satisfy the preset condition. In this case, it may be understood as that the terminal device performs the action of determining whether the signal of the cell B and the signal of the neighboring cell of the cell B satisfy the preset condition only when a specific event occurs (the specific event is. for example, the terminal device determining that the reporting condition for the preset measurement event is satisfied), so that the terminal device can perform the action of determining whether the signal of the cell B and the signal of the neighboring cell of the cell B satisfy the preset condition at an appropriate time, thereby reducing power consumption of the terminal device.

It may be understood that, if the terminal device detects that the reporting condition for the preset measurement event is satisfied, the terminal device may send a preset measurement report to the network device_b.

In some embodiments of this application, after the terminal device sends the preset measurement report to the network device_b for the first time, the terminal device may determine whether the signal of the cell B and the signal of the neighboring cell of the cell B satisfy the preset condition. In this case, it may be understood as that the terminal device performs the action of determining whether the signal of the cell B and the signal of the neighboring cell of the cell B satisfy the preset condition only when a specific event occurs (the specific event is, for example, the terminal device sending the preset measurement report to the network device_b for the first time), so that the terminal device performs the action of determining whether the signal of the cell B and the signal of the neighboring cell of the cell B satisfy the preset condition at an appropriate time, thereby reducing power consumption of the terminal device. When the terminal device determines that the signal of the cell B and the signal of the neighboring cell of the cell B satisfy the preset condition, the terminal device performs step S103. However, when the terminal device determines that the signal of the cell B and the signal of the neighboring cell of the cell B do not satisfy the preset condition, the terminal device redetermines whether the signal of the cell B and the signal of the neighboring cell of the cell B satisfy the preset condition (which may be understood as that the terminal device may continuously monitor whether the signal of the cell B and the signal of the neighboring cell of the cell B satisfy the preset condition).

It may be understood that the terminal device may further determine whether the signal of the cell B and the signal of the neighboring cell of the cell B satisfy the preset condition under other conditions. For details, refer to the following. The details are not described herein.

It should be noted that due to factors such as a position of the terminal device, a signal-to-noise ratio, signal strength, and signal quality of the cell B may vary over time, and a signal-to-noise ratio, signal strength, and signal quality of the neighboring cell of the cell B may also vary over time.

It may be understood that a correspondence exists between the preset measurement event and the preset measurement report. Specifically, an event type corresponding to the preset measurement report is the preset measurement event.

In some embodiments of this application, the preset measurement event may be an event A3, and the preset measurement report may be an A3 MR.

In some other embodiments of this application, the preset measurement event may be an event A5, and the preset measurement report may be an A5 MR.

In some embodiments of this application, a reporting condition for the event A3 may be: quality of the serving cell is higher than quality of the neighboring cell by a specific value (for example, 5 decibels) within a period of time (for example, 1 second).

It may be understood that for the reporting condition for the preset measurement event, refer to relevant technical documents. Details are not described herein.

It should be noted that as long as the signal of the cell B and the signal of any one of the neighboring cells of the cell B satisfy the preset condition, the terminal device may determine that the signal of the cell B and the signal of the neighboring cell of the cell B satisfy the preset condition.

In some embodiments of this application, that the signal of the cell B and the signal of the neighboring cell of the cell B satisfy the preset condition specifically includes: the signal quality of the cell B is less than or equal to a preset threshold 1, and the signal quality of the neighboring cell of the cell B is greater than the signal quality of the cell B and a difference between the signal quality of the neighboring cell of the cell B and the signal quality of the cell B is greater than or equal to a preset threshold 2. In an implementation, when the preset measurement event is the event A3, the preset threshold 2 may be greater than or equal to a difference threshold that needs to be satisfied between the neighbor cell and the current serving cell when the reporting condition for the event A3 is satisfied.

In some embodiments of this application, that the signal quality of the cell B is less than or equal to a preset threshold 1 may specifically include any one or more of the following: (1) an SNR of the cell B is less than or equal to a threshold_1; (2) an RSRP of the cell B is less than or equal to a threshold_2; or (2) RSRQ of the cell B is less than or equal to a threshold_3.

In some embodiments of this application, that the signal quality of the neighboring cell of the cell B is greater than the signal quality of the cell B and a difference between the signal quality of the neighboring cell of the cell B and the signal quality of the cell B is greater than or equal to a preset threshold 2 may specifically include any one or more of the following: (1) an SNR of the neighboring cell of the cell B is greater than the SNR of the cell B, and a difference between the SNR of the neighboring cell of the cell B and the SNR of the cell B is not less than a threshold_4; (2) an RSRP of the neighboring cell of the cell B is greater than the RSRP of the cell B, and a difference between the RSRP of the neighboring cell of the cell B and the RSRP of the cell B is not less than a threshold_5; or (3) RSRQ of the neighboring cell of the cell B is greater than the RSRQ of the cell B, and a difference between the RSRQ of the neighboring cell of the cell B and the RSRQ of the cell B is not less than a threshold_6.

It may be understood that the threshold_1, the threshold_2, the threshold_3, the threshold_4, the threshold_5, and the threshold_6 may be set according to actual needs. This is not limited in this application. It may be understood that units of the threshold_1, the threshold_2, the threshold_3, the threshold_4, the threshold_5, and the threshold_6 may be decibel (dB).

In some embodiments of this application, that the signal of the cell B and the signal of the neighboring cell of the cell B satisfy the preset condition may specifically include any one of the following: (1) the SNR of the cell B is less than or equal to a1 and the difference between the RSRP of the neighboring cell of the cell B and the RSRP of the cell B is not less than b1; or (2) the SNR of the cell B is less than or equal to a2 and the difference between the RSRP of the neighboring cell of the cell B and the RSRP of the cell B is not less than b2.

It may be understood that a1 is different from a2, and b1 is different from b2. Specifically, a1 may be less than a2, and b1 may be less than b2. Generally speaking, when the SNR of the cell B is relatively poor (e.g., equal to a1), as long as the RSRP of the neighboring cell of the cell B is slightly better than the RSRP of the cell B (e.g., the difference between the two is not less than b1), the terminal device may determine that the signal of the cell B and the signal of the neighboring cell of the cell B satisfy the preset condition. However, when the SNR of the cell B is not extremely poor (e.g., equal to a2), the RSRP of the neighboring cell of the cell B needs to be considerably better than the RSRP of the cell B (e.g., the difference between the two is not less than b2) the terminal device may determine that the signal of the cell B and the signal of the neighboring cell of the cell B satisfy the preset condition.

It may be understood that a1, a2, b1, and b2 may be set according to actual needs. This is not limited in this application. It may be understood that the units of a1, a2, b1, and b2 may be dB.

For example, a1 may be -8 dB, b1 may be -3 dB, a2 may be -6 dB, and b2 may be 6 dB.

In some embodiments of this application, that the signal of the cell B and the signal of the neighboring cell of the cell B satisfy the preset condition may specifically include any one of the following: (1) the SNR of the cell B is less than or equal to a1, the difference between the RSRP of the neighboring cell of the cell B and the RSRP of the cell B is not less than b1, the SNR of the neighboring cell of the cell B is greater than the SNR of the cell B, and the difference between the SNR of the neighboring cell of the cell B and the SNR of the cell B is greater than the threshold_4; or (2) the SNR of the cell B is less than or equal to a2, the difference between the RSRP of the neighboring cell of the cell B and the RSRP of the cell B is not less than b2, the SNR of the neighboring cell of the cell B is greater than the SNR of the cell B, and the difference between the SNR of the neighboring cell of the cell B and the SNR of the cell B is greater than the threshold_4.

It may be understood that the "difference between the two" in this application refers to the difference obtained by subtracting a smaller one of the two from a larger one.

It may be understood that an English full name of SNR is SIGNAL NOISE RATIO, i.e., signal-to-noise ratio. An SNR generally refers to signal to interference plus noise ratio (Signal to Interference plus Noise Ratio, SINR), which is a ratio of strength of a received useful signal to strength of a received interference signal (noise and interference). An English full name of RSRP is Reference Signal Receiving Power, i.e., reference signal received power. An RSRP is a key parameter in an LTE network, which may represent wireless signal strength and one of the physical layer measurement requirements. It is an average of received signal powers on all REs (resource elements) carrying reference signals within a specific symbol. An English full name of RSRQ is Reference Singnal Received Quality, i.e., reference signal receiving quality. RSRQ mainly measures received quality of a particular downlink cell reference signal. RSRQ is defined as N * RSRP/RSSI, where N is a number of resource blocks (RB) in a measurement bandwidth for a received signal strength indicator (Received Signal Strength Indicator, RSSI) in an LTE carrier.

It should be noted that when the terminal device does not successfully obtain within a preset duration a handover message returned by the network side after the terminal device sends the preset measurement report to the network device_b for the first time, the terminal device may send the preset measurement report to the network device_b a plurality of times.

S103: The terminal device starts a timer T1.

When the terminal device determines that the signal of the cell B and the signal of the neighboring cell of the cell B satisfy the preset condition, the terminal device starts the timer T1.

It may be understood that a duration defined by the timer T1 may be set according to actual needs. This is not specifically limited in this application. For example, the duration defined by the timer T1 may be 300 milliseconds (ms). For another example, the duration defined by the timer T1 may be 500 ms.

In some embodiments of this application, the duration defined by the timer T1 may be defined based on a trigger duration of an RLF. Reasons for triggering the RLF may include a handover failure caused by radio interference, cell warning, device problems, terminal problems, neighboring cell misconfiguration, and the like; weak coverage of a wireless network; out of synchronization of a base station of a cell; full load of a target cell; and the like.

According to the 3GPP protocol, the reasons for triggering the RLF may specifically include the following: In a possible implementation, the terminal device triggers the RLF process due to expiration of a timer T310. In a possible implementation, the terminal device triggers the RLF process due to a random access problem indication from an MCG (Master Cell Group, master cell group) MAC (Medium Access Control, media access control). In a possible implementation, the terminal device triggers the RLF process when a number of retransmissions of the MCG RLC (Radio Link Control, Radio Link Control) reaches a maximum value. In a possible implementation, the terminal device triggers the RLF process due to an uplink LBT (Listen Before Talk, listen before talk) fault. In a possible implementation, an IAB-MT (Integrated Access and Backhaul-Mobile Termination, integrated access and backhaul-mobile termination) triggers the RLF process due to receiving a BH (Backhaul Link, backhaul link) RLF indication on a BAP (Backhaul Adaptation Protocol, backhaul adaptation protocol) entity. It may be understood that, for specific meanings of the MCG MAC, the MCG RLC, the LBT, the BAP, the BH RLF, and the IAB-MT, refer to relevant protocols. Details are not described herein.

That the terminal device triggers the radio link failure RLF process in advance mentioned in some embodiments of this application may be understood as that under the same scenario, a time at which the terminal device triggers the RLF in this solution is earlier than a time at which the RLF is triggered in the standard protocol rather than the solution.

In some embodiments of this application, the duration defined by the timer T1 may be shorter than a duration defined by the timer T310. The duration of the timer T310 may be a duration of T310 as specified in the standard protocol, or may be a duration of T310 adjusted in the terminal device. In this way, the timer T1 may expire earlier than the timer T310, so that the terminal device can trigger the RLF process earlier, thereby reducing a duration of service stalling. In some embodiments of this application, the duration defined by the timer T310 is 1 second (s). It may be understood that the timer T310 is configured to monitor a time for waiting the radio link failure. When the UE performs radio link detection and a number of consecutively received downlink out-of-synchronization (out of sync) indications equals N310, the timer T310 is triggered to start. If the number of consecutively received downlink in-synchronization (insync) indications equals N311 during the T310, the timer T310 is stopped, indicating that the link synchronization is restored. If the timer T310 expires, it is considered that a radio link failure is detected, and an RRC reestablishment process is initiated.

S104: The terminal device determines to trigger an RLF process if the timer T1 expires but the terminal device does not receive a handover message. According to the RLF process, the terminal device performs cell selection and selects the cell C to reside in. The cell C is an adjacent cell of the cell B.

If the terminal device does not receive a handover message transmitted by the network device_b within the duration defined by the timer T1, that is, if the timer T1 expires but the terminal device does not receive the handover message, the terminal device may reselect a cell to reside in. The terminal device finally selects the cell C to reside in. It may be understood that the cell C is an adjacent cell of the cell B. Specifically, the cell C is one of at least one adjacent cell of the cell B.

It may be understood that the handover message may include parameters required for the terminal device to connect to the target cell, for example, radio resource configurations such as a cell ID, a carrier frequency, and a target power and physical resource configurations. In some embodiments of this application, the handover message may be an RRC connection reconfiguration (RRC Connection Reconfiguration) message.

In some embodiments of this application, if the timer T1 expires but the terminal device does not receive the handover message, the terminal device triggers the RLF process. According to the RLF process, the terminal device performs cell selection and selects the cell C with a better signal to reside in. In some embodiments of this application, the cell C is a cell with a strongest signal among the at least one adjacent cell of the cell B.

It may be understood that, if the terminal device receives the handover message sent by the network device_b within the duration defined by the timer T1, the terminal device may perform cell handover based on the handover message, and may terminate the timer T1.

S105: The terminal device establishes, through an RRC reestablishment process, an RRC connection to a network device_c according to the RLF process. The network device_c is a network device corresponding to the cell C.

The terminal device may establish an RRC connection to the network device_c after selecting the cell C to reside in. In some embodiments of this application, the terminal device determines that the RLF condition is satisfied, and resides in the cell C through cell selection. In this case, the terminal device initiates an RRC reestablishment process. Specifically, the terminal device prepares to send an RRC connection reestablishment request (RRC Connection Reestablishment Request) to the network device_c. The terminal device needs to perform random connection before sending the RRC connection reestablishment request to the network device_c. It may be understood that for the RRC reestablishment process and the random connection process, refer to the relevant technical documents. Details are not described herein.

S106: The terminal device further executes the service through the RRC connection.

After establishing an RRC connection to the network device_c, the terminal device may further execute the service mentioned in step S101 through the RRC connection.

Compared with the existing solution, in some embodiments of this application, the RLF process is triggered in advance when some specific conditions are satisfied (for example, the reporting condition for the preset measurement event is satisfied, and a signal of a first cell and a signal of an adjacent cell of the first cell satisfy the preset condition), which can shorten a duration for the terminal device to trigger cell handover in a scenario requiring cell handover, so that the terminal device can hand over to another cell with a better signal as soon as possible (hand over to another cell through cell selection) when satisfying the cell handover condition. Therefore, the terminal device does not need to wait for a long time in the cell with a poor signal (during which the service is stalled) as a result of not receiving the handover message sent by the network side before triggering the RLF and then handing over to another cell. Therefore, a duration from the terminal device detecting that the signal of the current cell is poor to handing over to another cell is shortened, thereby shortening a stalling duration during the service execution by the terminal device.

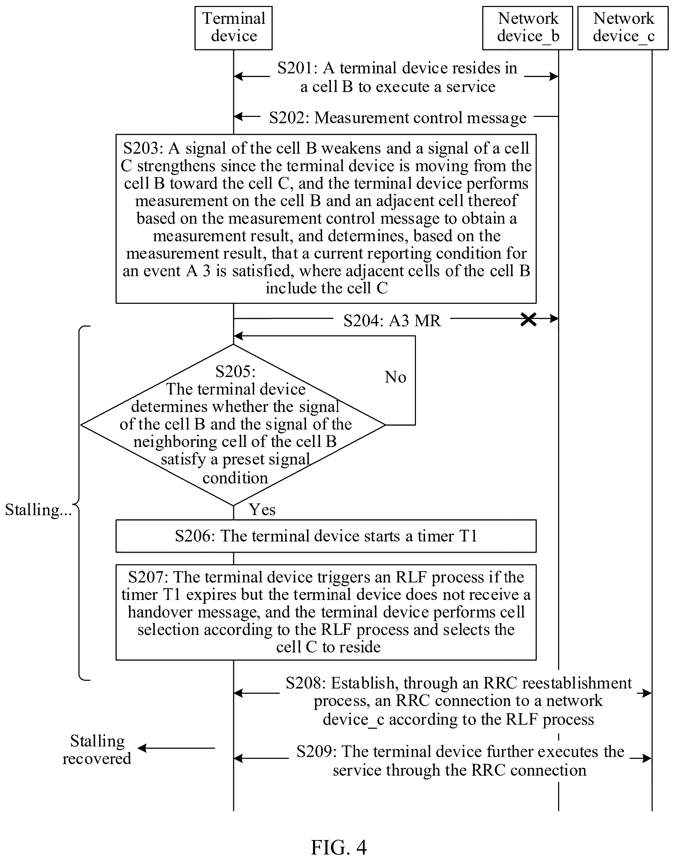

**A specific implementation of the foregoing embodiment is described below in combination with** **FIG. 4****.**

Refer to FIG. 4. FIG. 4 is a flowchart of another communication method according to an embodiment of this application. The communication method may include but is not limited to the following steps:

S201: A terminal device resides in a cell B to execute a service.

It may be understood that a current serving cell of the terminal device is the cell B. The terminal device may reside in the cell B to execute a service such as making a call or surfing the Internet.

S202: A network device_b sends a measurement control message to the terminal device. The network device_b is a network device corresponding to the cell B.

It may be understood that, when the terminal device resides in the cell B to execute a service, the network device corresponding to the cell B (i.e., the network device_b) may send a measurement control message to the terminal device. The measurement control message may include a plurality of measurement configuration items. It may be understood that for relevant description of the measurement control message and the measurement configuration items, refer to the foregoing description and relevant technical documents. Details are not described herein.

Correspondingly, the terminal device may receive the measurement control message sent by the network device_b.

S203: A signal of the cell B weakens rapidly and a signal of a cell C strengthens since the terminal device is moving from the cell B toward the cell C. The terminal device performs measurement on the cell B and an adjacent cell thereof based on the measurement control message to obtain a measurement result, and determines, based on the measurement result, that a current reporting condition for an event A 3 is satisfied. Adjacent cells of the cell B include a cell C.

On the one hand, since the terminal device is moving from the cell B toward a cell C, the signal of the cell B weakens quickly, and a signal of the cell C strengthens. On the other hand, after receiving the measurement control message sent by the network device_b, the terminal device may perform measurement on the cell B and the adjacent cell thereof based on the measurement control message to obtain the measurement result. It may be understood that the measurement result may indicate that the cell B has a strong signal and the cell C has a weak signal. The terminal device may determine that a reporting condition for an event A 3 is currently satisfied based on the measurement result.

In some embodiments of this application, when the terminal device is moving rapidly from the cell B to the cell C, or when obstruction by objects occurs during the movement of the terminal device from the cell B to the cell C, the signal of the cell B may weaken rapidly.

It may be understood that, for the reporting condition for the event A3, refer to the foregoing description and relevant technical documents. Details are not described herein.

S204: The terminal device sends an A3 MR to the network device_b.

After detecting that the reporting condition for the event A3 is currently satisfied, the terminal device may send the A3 MR to the network device_b. In some embodiments, within a preset duration after the terminal device sends the A3 MR, the terminal device fails to obtain a handover message returned by the network device_b based on the A3 MR. Examples are as follows:

In a case, as shown in FIG. 4, the network device_b fails to receive the A3 MR sent by the terminal device.

In another case, the network device_b can successfully receive the A3 MR sent by the terminal device, but the network device_b fails to normally transmit the handover message to the terminal device (the network device_b may encounter a fault).

Alternatively, in another case, the network device_b can successfully receive the A3 MR sent by the terminal device and sends the handover message to the terminal device, but the terminal device fails to receive the handover message or cannot decode the handover message.

In the foregoing cases, the terminal device may send the A3 MR to the network device_b a plurality of times.

S205: The terminal device determines whether the signal of the cell B and a signal of a neighboring cell of the cell B satisfy a preset condition.

It may be understood that the terminal device may first perform step S203 and then perform step S205, or may first perform step S205 and then perform step S203, or may perform step S203 and step S205 simultaneously. Whether the terminal device performs step S203 or step S205 first is not limited in this application.

In some embodiments of this application, the terminal device may determine whether the signal of the cell B and the signal of the neighboring cell of the cell B satisfy the preset condition after detecting whether the reporting condition for the event A3 is currently satisfied (in an embodiment, after detecting that the reporting condition for the event A3 is currently satisfied). In this case, a time interval between a time at which the terminal device detects whether the reporting condition for the event A3 is currently satisfied and a time at which the terminal device determines whether the signal of the cell B and the signal of the neighboring cell of the cell B satisfy the preset condition is short. For example, the time interval between the time at which the terminal device detects whether the reporting condition for the event A3 is currently satisfied and the time at which the terminal device determines whether the signal of the cell B and the signal of the neighboring cell of the cell B satisfy the preset condition is less than a preset duration_1. It may be understood that the preset duration_1 may be set according to actual needs. This is not limited in this application. For example, the preset duration_1 may be 1 s.

In some embodiments of this application, the terminal device may determine whether the signal of the cell B and the signal of the neighboring cell of the cell B satisfy the preset condition at the same time of detecting whether the reporting condition for the event A3 is currently satisfied.

In some embodiments of this application, the terminal device may determine whether the signal of the cell B and the signal of the neighboring cell of the cell B satisfy the preset condition before detecting whether the reporting condition for the event A3 is currently satisfied. In this case, the time interval between the time at which when the terminal device determines whether the signal of the cell B and the signal of the neighboring cell of the cell B satisfy the preset condition and the time at which the terminal device detects whether the reporting condition for the event A3 is currently satisfied is short. For example, the time interval between the time at which the terminal device detects whether the reporting condition for the event A3 is currently satisfied and the time at which the terminal device determines whether the signal of the cell B and the signal of the neighboring cell of the cell B satisfy the preset condition is less than a preset duration_2. It may be understood that the preset duration_1 may be set according to actual needs. This is not limited in this application. For example, the preset duration_2 may be 1 s.

It may be understood that the terminal device may first perform step S204 and then perform step S205, or may first perform step S205 and then perform step S204, or may perform step S204 and step S205 simultaneously. Whether the terminal device performs step S204 or step S205 first is not limited in this application.

In some embodiments of this application, the terminal device may determine whether the signal of the cell B and the signal of the neighboring cell of the cell B satisfy the preset condition after sending the A3 MR to the network device_b for the first time. In this case, a time interval between a time at which the terminal device transmits the A3 MR to the network device_b for the first time and the time at which the terminal device determines whether the signal of the cell B and the signal of the neighboring cell of the cell B satisfy the preset condition is short. For example, in this case, the time interval between the time at which the terminal device transmits the A3 MR to the network device_b for the first time and the time at which the terminal device determines whether the signal of the cell B and the signal of the neighboring cell of the cell B satisfy the preset condition is less than a preset duration_3. It may be understood that the preset duration_3 may be set according to actual needs. This is not limited in this application. For example, the preset duration_3 may be 1 s.

In some embodiments of this application, the terminal device may determine whether the signal of the cell B and the signal of the neighboring cell of the cell B satisfy the preset condition at the same time of sending the A3 MR to the network device_b for the first time.

In some embodiments of this application, the terminal device may send the A3 MR to the network device_b for the first time after the terminal device determines whether the signal of the cell B and the signal of the neighboring cell of the cell B satisfy the preset condition. In this case, the time interval between the time at which the terminal device determines whether the signal of the cell B and the signal of the neighboring cell of the cell B satisfy the preset condition and the time at which the terminal device sends the A3 MR to the network device_b for the first time is short. For example, the time interval between the time at which the terminal device determines whether the signal of the cell B and the signal of the neighboring cell of the cell B satisfy the preset condition and the time at which the terminal device sends the A3 MR to the network device_b for the first time is less than a preset duration_4. It may be understood that the preset duration_4 may be set according to actual needs. This is not limited in this application. For example, the preset duration_4 may be 1 s.

It may be understood that the preset duration_1, the preset duration_2, the preset duration_3, and the preset duration_4 may be the same or different. This is not limited in this application.

It may be understood that, for relevant description of the preset condition, refer to the foregoing description. Details are not described herein.

S206: The terminal device starts a timer T1.

When the terminal device determines that the signal of the cell B and the signal of the neighboring cell of the cell B satisfy the preset condition, the terminal device starts the timer T1. It may be understood that a time interval between step S205 and step S206 performed by the terminal device is short. For relevant description of the short time interval, refer to the foregoing description. Details are not described herein. For relevant description of the timer T1, refer to the foregoing description. Details are not described herein.

It may be understood that, since the terminal device performs step S206 after performing step S205, and whether the terminal device performs step S205 or step S204 first is not limited in this application, the terminal device may first perform step S204 and then perform step S206, or first perform step S206 and then perform step S204, or perform step S204 and step S206 simultaneously. Whether the terminal device performs step S204 or step S206 first is not limited in this application. It may be understood that, since a time interval between step S203 and step S205 performed by the terminal device is short, and a time interval between step S204 and step S205 performed by the terminal device is short, and the terminal device performs step S204 after performing step S203, the terminal device may first perform step S204 and then perform step S206, or first perform step S206 and then perform step S204, or perform step S204 and step S206 simultaneously. Whether the terminal device performs step S204 or step S206 first is not limited in this application. It may be understood that, similarly to the foregoing text, when the terminal device first performs step S204 and then performs step S206, or first performs step S206 and then performs step S204, the time interval between step S204 and step S206 performed by the terminal device is short. For relevant description of the short time interval, refer to the foregoing description. Details are not described herein.

S207: The terminal device triggers an RLF process if the timer T1 expires but the terminal device does not receive a handover message. According to the RLF process, the terminal device performs cell selection and selects the cell C to reside in.

It may be understood that, hoping to receive the handover message sent the network side based on the A3 MR, the terminal device may send the A3 MR a plurality of times before the timer T1 expires.

If the terminal device does not receive the handover message within a duration defined by the timer T1, that is, the timer T1 expires but the terminal device does not receive the handover message, the terminal device triggers the RLF process. According to the RLF process, the terminal device may perform cell selection. Based on a cell selection rule, the terminal device may select the cell C to reside in. The cell C is an adjacent cell of the cell B.

It should be noted that the signal of the cell C is better than the signal of the cell B. For example, signal strength of the cell C is greater than signal strength of the cell B. For example, signal quality of the cell C is better than signal quality of the cell B.

It may be understood that, for relevant description of the handover message, refer to the foregoing description. Details are not described herein.

S208: The terminal device establishes, through an RRC reestablishment process, an RRC connection to a network device_c according to the RLF process. The network device_c is a network device corresponding to the cell C.

After determining that the RLF condition is satisfied and selecting the cell C to reside in, the terminal device may initiate an RRC reestablishment process (for example, send an RRC reestablishment request) to establish an RRC connection to the network device_c. The network device_c is a network device corresponding to the cell C.

It may be understood that the RRC reestablishment and the RRC connection reestablishment mentioned in this application indicate the same meaning.

S209: The terminal device further executes the service through the RRC connection.

After establishing an RRC connection to the network device_c, the terminal device may further execute the service mentioned in step S201 through the RRC connection.

**An apparatus involved in embodiments of this application is described below.**

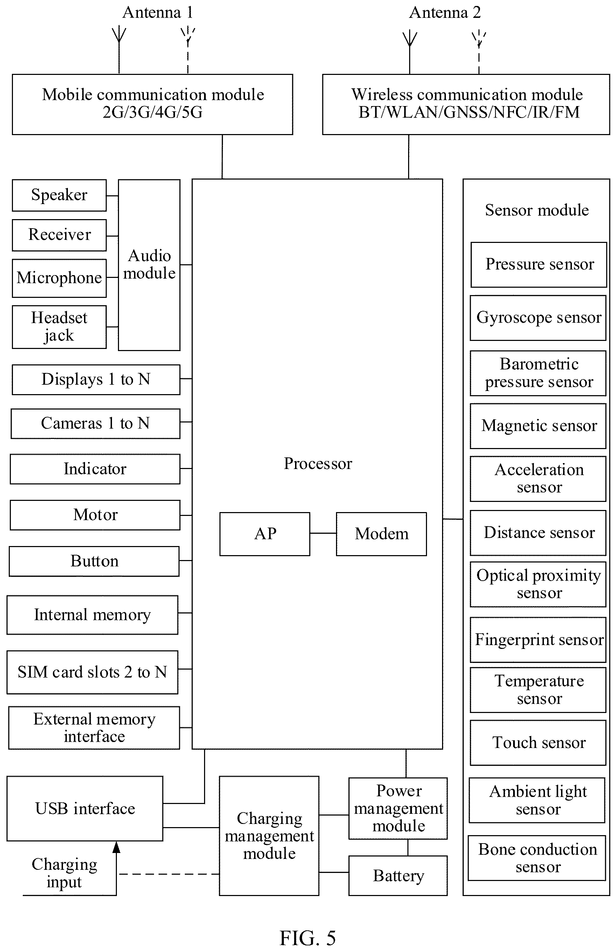

FIG. 5 is a schematic diagram of a hardware structure of a terminal device according to an embodiment of this application.

As shown in FIG. 5, the structure of the terminal device may include a processor, an external memory interface, an internal memory, a universal serial bus (Universal Serial Bus, USB) interface, a charging management module, a power management module, a battery, an antenna 1, an antenna 2, a mobile communication module, a wireless communication module, a sensor module, a button, a motor, an indicator, a camera, a display, an SIM card slot, and the like. The audio module may include a speaker, a receiver, a microphone, a headset jack, and the like. The sensor module may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

It may be understood that the structure illustrated in this embodiment of this application does not constitute a specific limitation on the terminal device. In some other embodiments, the terminal device may include more or fewer components than those shown in the figure, some merged components, some split components or different component arrangements. The components shown in the figure may be implemented by using hardware, software, or a combination of software and hardware.

The processor may include one or more processing units. For example, the processor may include an application processor (Application Processor, AP), a modem processor (Modem, which may also be referred to as a baseband processor), a graphics processing unit (Graphics Processing Unit, GPU), an image signal processor (Image Signal Processor, ISP), a controller, a video codec, a digital signal processor (Digital Signal Processor, DSP), and/or a neural network processing unit (Neural-network Processing Unit, NPU). Different processing units may be devices independent of each other, or may be integrated in one or more processors. The processor is a nerve center and command center of a terminal device. The controller may generate an operation control signal based on instruction operation code and a timing signal, and control instruction obtaining and instruction execution.

A wireless communication function of the terminal device may be implemented through the antenna 1, the antenna 2, the mobile communication module, the wireless communication module, the Modem, and the like. In some embodiments, in the terminal device, the antenna 1 is coupled to the mobile communication module, and the antenna 2 is coupled to the wireless communication module, so that the terminal device may communicate with a network and another device through a wireless communication technology.

An operating system of the terminal device may use a hierarchical architecture, an event-driven architecture, a microcore architecture, a micro service architecture, or a cloud architecture. In this embodiment of this application, an Android system with a hierarchical architecture is used as an example to illustrate a software structure of the terminal device.

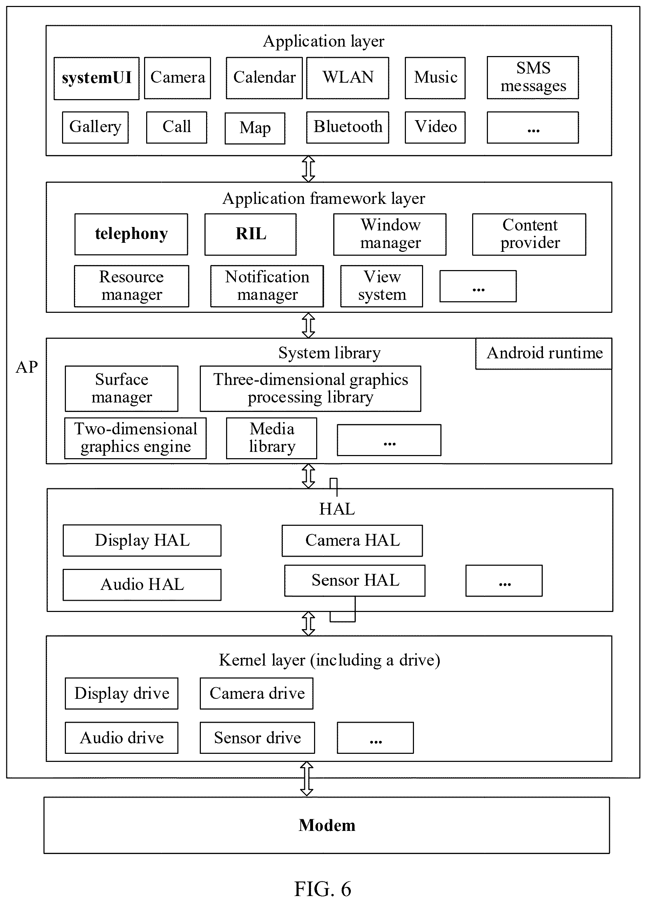

FIG. 6 is a schematic diagram of a software structure of a terminal device according to an embodiment of this application.

The software architecture of the terminal device adopts a hierarchical architecture. In the hierarchical architecture, software is divided into a plurality of layers, and each layer has a clear role and task. The layers communicate with each other through a software interface. Taking the Android system, which runs on the AP, as an example, in some embodiments, the Android system is divided into five layers, which, from top to bottom include an application layer, an application framework (Framework) layer, an Android runtime (Android runtime) and system library, a hardware abstraction layer (HAL), and a system kernel (Kernel) layer.

The application layer may include a series of application packages. The application packages may include APPs such as camera, gallery, calendar, call, map, WLAN, Bluetooth, music, video, and SMS messages. The application layer may further include a systemUI (system UI), which is configured to display an interface of the terminal device, for example, display a signal icon corresponding to a SIM card or display a call interface. The application framework layer provides an application programming interface (Application Programming Interface, API) and a programming framework for applications at the application layer. The application framework layer includes predefined functions. The application framework layer may include a window manager, a content provider, a view system, a phone manager, a resource manager, a notification manager, and the like. The phone manager is configured to provide the call function of the terminal device, such as managing a call status (including answering, hanging up, etc.), and the phone manager is represented by telephony in FIG. 6. The application framework layer may further include an RIL (Radio Interface Layer, radio interface layer), and the modem (Modem) processor may interact with the telephony through the RIL.

The foregoing embodiments are merely used to describe the technical solutions of this application, and are not intended to limit this application. Although this application is described in detail with reference to the foregoing embodiments, it should be understood by a person skilled in the art that modifications may still be made to the technical solutions described in the foregoing embodiments, or equivalent substitutions may be made to some of the technical features, and these modifications or substitutions do not cause the essence of corresponding technical solutions to depart from the scope of the technical solutions in embodiments of this application.

## Claims

1. A communication method, applied to a terminal device, the method comprising:
residing, by the terminal device, in a first cell to execute a service;
determining, by the terminal device, whether a reporting condition for a preset measurement event is satisfied, and determining whether a signal of the first cell and a signal of an adjacent cell of the first cell satisfy a preset condition, wherein the first cell is a current serving cell of the terminal device;
starting, by the terminal device, a first timer when the reporting condition for the preset measurement event is satisfied and the signal of the first cell and the signal of the adjacent cell of the first cell satisfy the preset condition;
triggering, by the terminal device, a radio link failure RLF process in advance when the first timer expires but the terminal device does not receive a handover message, wherein the handover message is used to instruct the terminal device to perform cell handover;
performing, by the terminal device, cell selection according to the RLF process, and selecting a second cell to reside in;
establishing, by the terminal device through a radio resource control RRC reestablishment process, an RRC connection to a network device corresponding to the second cell according to the RLF process; and
further executing, by the terminal device, the service through the RRC connection.

2. The method according to claim 1, wherein the preset condition comprises: signal quality of the first cell is less than or equal to a first preset threshold, and signal quality of the second cell is greater than the signal quality of the first cell and a difference between the signal quality of the second cell and the signal quality of the first cell is greater than or equal to a second preset threshold.

3. The method according to claim 2, wherein that signal quality of the first cell is less than or equal to a first preset threshold specifically comprises at least one of the following: a signal-to-noise ratio of the first cell is less than or equal to a first threshold; a reference signal received power of the first cell is less than or equal to a second threshold; or reference signal received quality of the first cell is less than or equal to a third threshold; and
that signal quality of the second cell is greater than the signal quality of the first cell and a difference between the signal quality of the second cell and the signal quality of the first cell is greater than or equal to a second preset threshold specifically comprises at least one of the following: a signal-to-noise ratio of the second cell is greater than or equal to the signal-to-noise ratio of the first cell and a difference between the signal-to-noise ratio of the second cell and the signal-to-noise ratio of the first cell is greater than or equal to a fourth threshold; a reference signal received power of the second cell is greater than or equal to the reference signal received power of the first cell and a difference between the reference signal received power of the second cell and the reference signal received power of the first cell is greater than or equal to a fifth threshold; or reference signal received quality of the second cell is greater than or equal to the reference signal received quality of the first cell and a difference between the reference signal received quality of the second cell and the reference signal received quality of the first cell is greater than or equal to a sixth threshold.

4. The method according to any one of claims 1 to 3, further comprising: sending, by the terminal device, a preset measurement report at least once when the reporting condition for the preset measurement event is satisfied, wherein the preset measurement report corresponds to the preset measurement event; and
the triggering, by the terminal device, an RLF process in advance comprises: a duration from sending, by the terminal device, the preset measurement report for the first time to expiration of the first timer is less than a duration from sending, by the terminal device, the preset measurement report for the first time to expiration of a timer T310.

5. The method according to any one of claims 1 to 3, wherein the triggering, by the terminal device, an RLF process in advance comprises: a duration of the first timer is less than a duration of a timer T310.

6. The method according to any one of claims 1 to 5, wherein the triggering, by the terminal device, an RLF process in advance comprises: the duration of the first timer is 300 milliseconds or 500 milliseconds.

7. The method according to any one of claims 1 to 6, wherein the triggering, by the terminal device, an RLF process in advance comprises:
the duration from sending, by the terminal device, the preset measurement report corresponding to the preset measurement event for the first time to expiration of the first timer satisfies at least one of the following:
the duration is less than a duration from sending, by the terminal device, the preset measurement report for the first time to occurrence of an uplink listen before talk LBT failure;
the duration is less than a duration from sending, by the terminal device, the preset measurement report for the first time to receiving a random access problem indication from a master cell group media access control MCG MAC;
the duration is less than a duration from sending, by the terminal device, the preset measurement report for the first time to reaching, by a retransmission count of the master cell group radio link control MCG RLC, a maximum value; or
the duration is less than a duration from sending, by the terminal device, the preset measurement report for the first time to receiving a backhaul link radio link failure BH RLF indication on a backhaul adaptation protocol BAP entity.

8. The method according to any one of claims 1 to 7, wherein a time at which the terminal device starts the first timer is earlier than a time at which the terminal device sends the preset measurement report corresponding to the preset measurement event to the network device corresponding to the first cell for the first time, and a time interval between the time at which the terminal device starts the first timer and the time at which the terminal device sends the preset measurement report to the network device corresponding to the first cell for the first time is short;
the time at which the terminal device starts the first timer is later than the time at which the terminal device sends the preset measurement report to the network device corresponding to the first cell for the first time, and the time interval between the time at which the terminal device starts the first timer and the time at which the terminal device sends the preset measurement report to the network device corresponding to the first cell for the first time is short; or
the time at which the terminal device starts the first timer is the same as the time at which the terminal device sends the preset measurement report to the network device corresponding to the first cell for the first time.

9. The method according to any one of claims 1 to 8, wherein the preset measurement event is an event A3 or an event A5.

10. The method according to any one of claims 1 to 9, wherein the second cell is a cell with a strongest signal among one or more adjacent cells of the first cell.

11. A terminal device, comprising a processor and a memory, wherein the processor invokes and executes a computer program stored in the memory, so that the terminal device implements the method according to any one of claims 1 to 10.

12. A chip system, applied to a terminal device, wherein the chip system comprises at least one processor and an interface, the interface is configured to receive instructions and transmit the instructions to the at least one processor, and the at least one processor runs the instructions, so that the terminal device performs the method according to any one of claims 1 to 10.
